Europäisches Patentamt

(19) European Patent Office

Office européen des brevets

(11) Numéro de publication : **0 187 562
B1**

(12) **FASCICULE DE BREVET EUROPÉEN**

(45) Date de publication du fascicule du brevet :
26.04.89

(51) Int. Cl.⁴ : **G 01 F 1/68, G 01 F 25/00**

(21) Numéro de dépôt : **85402296.9**

(22) Date de dépôt : **25.11.85**

(54) Débitmètre à élément thermorésistant.

(30) Priorité : 07.12.84 FR 8418702

(43) Date de publication de la demande :
16.07.86 Bulletin 86/29

(45) Mention de la délivrance du brevet :
26.04.89 Bulletin 89/17

(84) Etats contractants désignés :
AT BE CH DE FR GB IT LI LU NL SE

(56) Documents cités :
DE–A– 3 415 507
GB–A– 2 080 545
TRANSACTIONS OF THE INST. OF MEASUREMENT &
CONTROL, vol. 3, no. 2, juin 1981, pages 71-78,
Dorking, GB; S. MARLOWE: "A microprocessor-
based automatic polynomial lineariser for constanttemperature anemometry systems"

(73) Titulaire : L'AIR LIQUIDE, SOCIETE ANONYME POUR
L'ETUDE ET L'EXPLOITATION DES PROCEDES
GEORGES CLAUDE
75, Quai d'Orsay
F-75321 Paris Cedex 07 (FR)

(72) Inventeur : Bourdon, Guy
2, Square Vivaldi Résidence Les Epinettes
F-78150 Le Chesnay (FR)
Inventeur : Lampin, Dominique
148, rue Boucicaut
F-92260 Fontenay-Aux-Roses (FR)

(74) Mandataire : Jacobson, Claude et al
L'AIR LIQUIDE, SOCIETE ANONYME POUR L'ETUDE
ET L'EXPLOITATION DES PROCEDES GEORGES
CLAUDE 75, quai d'Orsay
F-75321 Paris Cedex 07 (FR)

**Description**

La présente invention concerne un débitmètre à élément thermorésistant ainsi que son procédé d'étalonnage.

En spirométrie on utilise couramment des débitmètres à élément thermorésistant comprenant généralement un fil chaud maintenu à température constante. Dans les débitmètres connus de ce genre le fil thermorésistant constitue l'une des branches d'un pont de Wheatstone et pour maintenir constante la température de ce fil on maintient le pont en équilibre à l'aide d'un asservissement. On démontre que pour des fils de même nature et de même diamètre la réponse du débitmètre ne dépend que de la température du fil thermorésistant. Par ailleurs, pour un débit nul et une orientation donnée du fil dans l'espace, la température de celui-ci ne dépend que de l'intensité du courant qui le traverse. On réalise donc généralement l'étalonnage du débitmètre de la façon suivante : après avoir correctement orienté le débitmètre dans l'espace, on en bouche au moins une extrémité afin d'assurer un débit nul, puis on fait varier la valeur d'une résistance montée dans la branche du pont de Wheatstone opposée à celle où se trouve le fil thermorésistant, de manière à obtenir dans ce fil un courant d'intensité égal à une valeur de référence et on obtient alors une température du fil réglée à une valeur constante désirée.

Un tel débitmètre présente cependant des inconvénients en ce qui concerne son montage et le procédé d'étalonnage utilisé. En effet pour obtenir une bonne stabilité de la boucle d'asservissement que l'on utilise conjointement avec le pont de Wheatstone, en vue de maintenir constante la température du fil résistant, on est obligé d'utiliser des composants de grande précision et par conséquent coûteux. Par ailleurs le pont de Wheatstone comprend, dans l'une de ses deux branches d'entrée, une résistance variable pouvant être constituée par un potentiomètre et dont le réglage est effectué manuellement, ce qui constitue une opération qu'il est naturel de chercher à éviter. Pour éviter un tel réglage manuel, on pourrait réaliser un ajustement automatique en utilisant, en tant que résistance variable, un transistor à effet de champ commandé par un montage électronique mais on serait alors toutefois confronté au problème de la dérive thermique importante d'un tel composant.

En ce qui concerne le procédé d'étalonnage des débitmètres connus, ce procédé exige que l'on oriente préalablement le débitmètre dans une position bien déterminée. Ceci implique donc que l'appareil soit utilisé par du personnel particulièrement bien au courant de son fonctionnement, ce qui peut ne pas toujours être le cas.

Dans une forme particulière de réalisation décrite dans le brevet GB-A-2 080 545, le débitmètre comprend un moyen amplificateur, dont une entrée est reliée à la masse par l'intermédiaire d'une résistance constante de faible valeur par rapport à l'impédance d'entrée dudit moyen amplificateur, tandis que ledit capteur est connecté entre une entrée et une sortie du moyen amplificateur, qui est constitué de deux amplificateurs montés en série.

Outre le fait que le dispositif décrit vise à tenir compte des éventuelles variations de température de l'air dont il vise à mesurer le débit et est de ce fait assez complexe, l'étalonnage auquel il conduit s'effectue en faisant passer un courant important dans l'élément thermorésistant, ce qui présente les inconvénients mentionnés plus haut.

On a également proposé dans le document « Transactions of the instrument of measurement and controls », volume 3, n° 2, juin 1981, pages 71-78, Porking, GB ; S. Marlowe : « A microprocessor-based automatic polynomial lineariser for constant — température anenometry », un système anemométrique à résistances équilibrées en pont de Wheatstone, où le moyen de détection d'un déséquilibre est constitué par un amplificateur qui assure une modification de la tension appliquée au pont dans un sens d'annulation du déséquilibre détecté, en sorte que cette tension est représentative du débit, et l'on utilise un microprocesseur pour linéariser la fonction tension-débit.

La présente invention vise à remédier à ces inconvénients en procurant un débitmètre de conception particulièrement simple et dont l'étalonnage peut être effectué automatiquement.

A cet effet, dans un débitmètre du type sus-mentionné à élément thermorésistif monté en série avec une résistance fixe reliée à la masse, maintenu à température constante par un moyen d'amplification à deux amplificateurs successifs, présentant une impédance d'entrée élevée devant les impédances des éléments thermorésistif et résistance fixe à la masse et dont le gain est maintenu constant en cours de fonctionnement, la sortie du premier amplificateur est reliée à l'entrée de tension de référence d'un convertisseur numérique-analogique dont la sortie analogique est reliée à l'entrée du second amplificateur, le convertisseur étant associé à un microprocesseur d'entrée qui définit le gain du second amplificateur.

Et l'invention propose un procédé d'étalonnage d'un tel débitmètre en vue de l'adapter à un capteur ayant un coefficient de température « α » et une température nominale de fonctionnement « T », qui consiste à déterminer d'abord, le capteur étant à la température ambiante « Ta », un gain minimal « Ga » correspondant à l'apparition d'un courant délivré par l'amplificateur et à régler ensuite le gain du moyen amplificateur à une valeur constante :

$$G = 1 + (Ga - 1)\frac{1 + \alpha T}{1 + \alpha Ta}$$

EP 0 187 562 B1

Ainsi, pour assurer à la fois le réglage du gain et l'automaticité de l'opération d'étalonnage, dans un débitmètre selon l'invention, le microprocesseur calcule à tout moment la valeur du gain et assure ainsi son maintien constant en opération normale de mesure de débit. Il faut noter à ce sujet que ce microprocesseur est uniquement un moyen de commande programmé du gain d'un amplificateur et qu'il ne joue absolument aucun rôle dans le traitement du signal de tension représentatif du débit mesuré, comme c'est le cas du document signalé précédemment.

On décrira ci-après, à titre d'exemples non limitatifs, diverses formes d'exécution de la présente invention, en référence au dessin annexé sur lequel :

La figure 1 est un schéma électrique d'un débitmètre à élément thermorésistant chaud à température constante suivant l'invention.

La figure 2 est un schéma électrique d'une forme d'exécution du débitmètre.

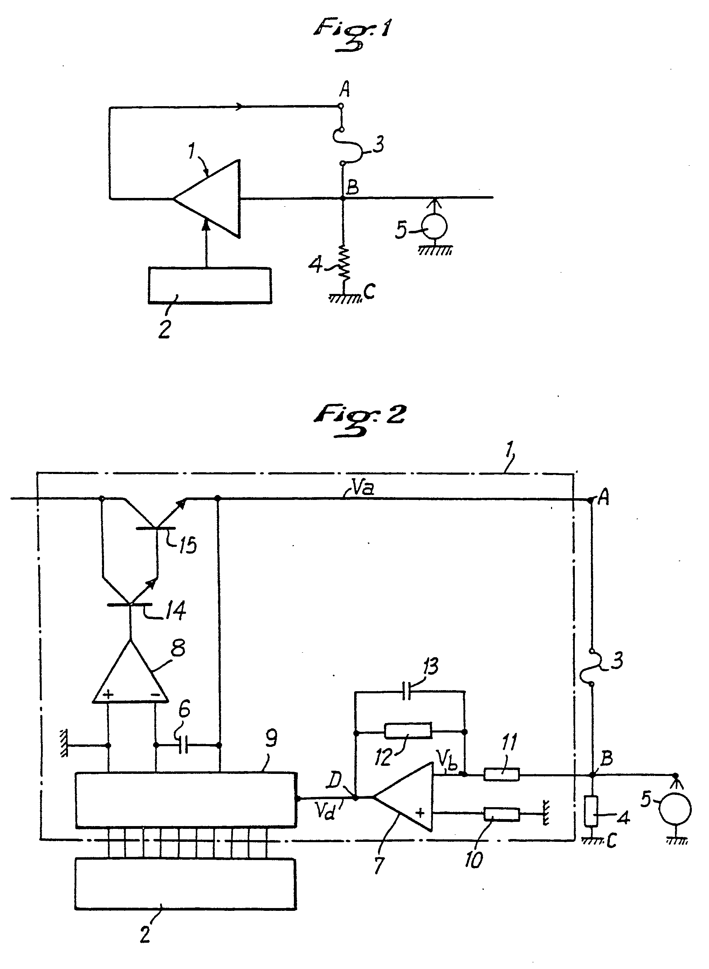

Le débitmètre à élément thermorésistant chaud, à température constante, qui est représenté sur la figure 1 comprend un amplificateur à gain variable 1 qui est pilotable électroniquement par un circuit de commande du gain 2. L'élément thermorésistant 3, en l'occurrence un fil, de résistance Rf, dont la température doit être maintenue constante, est relié, à l'une de ses extrémités A, à la sortie de l'amplificateur 1 et, à son autre extrémité B, à l'entrée de ce même amplificateur. Le point B est par ailleurs relié à la masse par l'intermédiaire d'une résistance constante 4 de valeur $R_1$ faible devant l'impédance d'entrée de l'amplificateur 1 à gain variable. La tension mesurée entre le point B et la masse C, au moyen d'un voltmètre 5, donne une indication du débit mesuré.

La résistance Rf du fil thermorésistant 3, c'est-à-dire sa température, dépend de la valeur du gain G de l'amplificateur 1. En effet comme on a Vac = (Rf + $R_1$) I, I étant l'intensité du courant traversant le fil thermorésistant 3, on a :

$$(Rf + R_1) I = G R_1 I$$

soit

$$G = 1 + \frac{Rf}{R_1}$$

Par conséquent si la valeur du gain G est maintenue constante, la valeur de la résistance Rf du fil thermorésistant 3 est également maintenue constante.

L'étalonnage du débitmètre suivant l'invention peut être naturellement réalisé de la même façon qu'antérieurement : autrement dit le capteur étant obstrué et convenablement orienté, on joue sur la valeur du gain G pour obtenir la valeur de courant désiré dans le fil thermorésistant 3. Toutefois il est toujours nécessaire d'orienter correctement le capteur.

Par contre, on peut réaliser la procédure d'étalonnage suivante : A la température ambiante Ta, le fil a une résistance Rfa telle que :

$$Rfa = Ro (1 + \alpha Ta)$$

avec

Ro = résistance du fil à 0 °C
$\alpha$ = coefficient thermique

Il existe donc un gain minimal Ga pour lequel le montage de la figure 1 peut boucler, c'est-à-dire que l'amplificateur 1 débite du courant. On a alors :

$$Ga = 1 + \frac{Rfa}{R_1} = 1 + \frac{R_0}{R_1} (1 + \alpha Ta)$$

Lorsque le fil thermorésistant 3 est porté à sa température de fonctionnement, pour laquelle sa résistance est :

$$G = 1 + \frac{Rf}{R_1} = 1 + \frac{R_0}{R_1} (1 + \alpha T)$$

On en déduit la relation :

$$G = 1 + (Ga - 1) \frac{1 + \alpha T}{1 + \alpha Ta} \qquad (I)$$

$\frac{1 + \alpha T}{1 + \alpha Ta}$ étant un terme constant (aux variations de Ta près), on voit que l'on peut déterminer la valeur G du gain à appliquer en connaissant la valeur de Ga.

3

Autrement dit, la formule (1) permet de déterminer à partir de la température de fonctionnement (T) à laquelle doit être porté le fil thermorésistant 1 et du gain minimal (Ga), la valeur du gain (G) à laquelle doit être ajusté l'amplificateur 1 pour obtenir, dans le fil thermorésistant 3, un courant 1 assurant l'obtention de la température désirée T du fil.

Par conséquent le débitmètre suivant l'invention comporte des moyens permettant de déterminer si le circuit est bouclé, c'est-à-dire si l'amplificateur 1 débite du courant. Ces moyens agissent dans le circuit de commande du gain 2 qui est constitué par un microprocesseur connaissant à chaque instant la valeur du gain G appliqué.

Par conséquent, lorsque l'ordre d'étalonnage est donné au microprocesseur 2, par appui sur une touche par exemple, celui-ci applique un gain G = 0 à l'amplificateur 1 puis il augmente progressivement ce gain G jusqu'à ce que le circuit boucle. A ce moment le microprocesseur 2 détecte que le circuit est bouclé et il détermine que le bouclage est réalisé pour une valeur Ga du gain. A partir de ce moment le microprocesseur calcule la valeur G par la formule (1) en utilisant la valeur Ga déterminée précédemment, et il applique ce gain à l'amplificateur 1. De ce fait le fil thermorésistant se trouve parcouru par un courant I assurant le maintien à la température T désirée. Le débitmètre se trouve alors étalonné.

On voit qu'avec le procédé d'étalonnage précité, le fil thermorésistant 3 n'est pas chauffé pendant l'étalonnage et que par conséquent son orientation dans l'espace n'influe pas sur la précision de cet étalonnage.

Dans la forme d'exécution non limitative de l'invention représentée sur la figure 2, l'amplificateur à gain variable 1 est constitué en fait par un ensemble de deux amplificateurs 7 et 8 entre lesquels est branché un convertisseur numérique/analogique 9 commandé par le microprocesseur 2. L'amplificateur 7 comprend deux entrées positive et négative, l'entrée positive étant reliée à la masse par une résistance 10, ayant une valeur de 8 kiloohms tandis que son entrée négative est reliée au point B par une résistance 11 de 10 kiloohms. La résistance 4, qui est branchée entre les points B et C (masse), a une très faible valeur de 20 ohms. Une résistance 12 de 40 kiloohms et un condensateur 13 sont branchés en parallèle entre l'entrée négative de l'amplificateur 7 et sa sortie à laquelle apparaît une tension Vd. Cette tension Vd correspond à la tension Vb amplifiée et inversée par l'amplificateur 7 de gain égal à —4. La tension Vd, filtrée par le condensateur 13, est appliquée à l'entrée de tension de référence du convertisseur numérique/analogique 9 qui est donc utilisé en multiplieur.

Le convertisseur numérique/analogique 9 a deux sorties qui sont respectivement connectées aux entrées négative et positive de l'amplificateur 8. Le courant de sortie de l'amplificateur 8 est amplifié par deux transistors 14 et 15 en cascade et la tension de sortie Va apparaît sur l'émetteur du transistor 15 auquel est connecté le fil thermorésistant 3.

Le microprocesseur 2 peut par conséquent multiplier la tension de sortie Vd de l'amplificateur 7 par un coefficient compris entre 0 et —1 et on obtient une tension Va au point A qui est égale à xVb, Vb étant la tension au point B, x étant compris entre 0 et 4. Un condensateur 16 est branché entre l'entrée négative de l'amplificateur 8 et l'émetteur du transistor 15, pour filtrer la tension de sortie Va.

## Revendications

1. Débitmètre à capteur thermorésistif, du genre comprenant un élément thermorésistif (3), monté en série avec une résistance fixe (4) reliée à la masse, maintenu à température constante par un moyen d'amplification (1) à deux amplificateurs successifs d'entrée (7, 8) et présentant une impédance d'entrée élevée devant les impédances des éléments (3) et (4) et dont le gain est maintenu constant en cours de fonctionnement, caractérisé en ce que la sortie du premier amplificateur (7) est reliée à l'entrée de tension de référence d'un convertisseur numérique-analogique (9) dont la sortie analogique est reliée à l'entrée du second amplificateur (8), le convertisseur associé étant un microprocesseur d'entrée (2) qui définit le gain du second amplificateur.

2. Procédé d'étalonnage d'un débitmètre selon la revendication 1 en vue de l'adapter à un capteur (3) ayant un coefficient de température « α » et une température de fonctionnement T, caractérisé en ce qu'on détermine d'abord, le capteur (3) étant à la température ambiante Ta, un gain minimal (Ga) correspondant à l'apparition d'un courant délivré par l'amplificateur (7, 8, 9, 14, 15) et en ce qu'on règle ensuite le gain du moyen amplificateur (7, 8, 9, 14, 15) à une valeur constante :

$$G = 1 + (Ga - 1)\frac{1 + \alpha T}{1 + \alpha Ta}$$

## Claims

1. A flowmeter with a thermoresistive pickup, of the type comprising a thermoresistive element (3) connected in series with an earthed constant value resistor (4), maintained at a constant temperature by amplifying means (1) incorporating two successive input amplifiers (7, 8) and having a high input impedance compared to the impedances of the elements (3) and (4) and the gain of which is kept constant during operation, characterised in that the output of the first amplifier (7) is connected to the reference voltage input of a digital-analog converter (9), the analog output of which is connected to the input of the second amplifier (8), the associated converter being an input microprocessor (2) which determines the gain of the second amplifier.

2. A method of calibrating a flowmeter according to claim 1 for the purpose of adapting the same to a pickup (3) having a thermal coefficient « $\alpha$ » and an operating temperature T, characterised in that whilst the pickup (3) is at the ambient temperature Ta, a minimum gain (Ga) corresponding to the appearance of a current supplied by the amplifier (7, 8, 9, 14, 15) is determined initially, and in that the gain of the amplifying means, (7, 8, 9, 14, 15) is thereafter set at a constant value :

$$G = 1 + (Ga - 1)\frac{1 + \alpha T}{1 + \alpha Ta}$$

### Patentansprüche

1. Durchflußmesser mit Thermistor-Meßfühler, umfassend ein Thermistor-Element (3), das in Reihe mit einem an Masse liegenden Festwiderstand (4) geschaltet ist und auf konstanter Temperatur gehalten wird durch eine Verstärkungseinrichtung (1) aus zwei hintereinandergeschalteten Eingangsverstärkern (7, 8), mit einer hohen Eingangsimpedanz vor den Impedanzen der Elemente (3) und (4) und mit Konstanthaltung der Verstärkung während des Betriebes, dadurch gekennzeichnet, daß der Ausgang des ersten Verstärkers (7) mit dem Bezugsspannungseingang eines Digital/Analog-Umsetzers (9) verbunden ist, dessen Analogausgang mit dem Eingang des zweiten Verstärkers (8) verbunden ist, und daß der zugeordnete Umsetzer ein Eingangs-Mikroprozessor (2) ist, der die Verstärkung des zweiten Verstärkers bestimmt.

2. Verfahren zum Eichen eines Durchflußmessers nach Anspruch 1, um den Durchflußmesser an einen Meßfühler (3) mit dem Temperaturkoeffizienten $\alpha$ und einer Betriebstemperatur T anzupassen, dadurch gekennzeichnet, daß bei auf der Ümgebungstemperatur Ta befindlichem Meßfühler (3) zunächst eine Mindestverstärkung (Ga) bestimmt wird, die dem Auftreten eines von dem Verstärker (7, 8, 9, 14, 15) abgegebenen Stroms entspricht, und daß dann die Verstärkung der Verstärkereinrichtung (7, 8, 9, 14, 15) auf einen Konstantwert :

$$G = 1 + (Ga - 1)\frac{1 + \alpha T}{1 + \alpha Ta}$$

eingestellt wird.

## Fig. 1

## Fig. 2